# EUROPEAN PATENT APPLICATION

(11) **EP 2 159 971 A1**
(43) Date of publication of application: **03.03.2010**
(21) Application number: 08784076.5
(22) Date of filing: 21.08.2008
(51) Int. Cl.: H04L 12/56

(54) **A SYSTEM, APPARATUS AND METHOD FOR USER SERVICE HANDOVER**

(30) Priority: 23.08.2007 CN 200710145121
(71) Applicant: Huawei Technologies Co., Ltd., Longgang District, Shenzhen Guangdong 518129 (CN)
(72) Inventor: WANG, Geng, Guangdong 518129 (CN)
(74) Representative: Charles, Glyndwr
(86) International application number: PCT/CN2008/072085
(87) International publication number: WO 2009/026835

(57) **Abstract**

A system, an apparatus, and a method for user service handover are provided. The handover system includes a Packet Switched (PS)-domain Access Network (AN), a Mobile Switching Center (MSC), a User Equipment (UE), a packet access unit, and optionally, a Circuit Switched (CS)-domain AN. The packet access unit sets up a signaling channel between the PS-domain AN in the PS domain and the MSC in the CS domain, and manages the bearer between the UE and the MSC. The PS-domain AN processes the handover to the CS-domain area or the PS-domain area. The CS-domain AN processes the handover to the CS-domain area or the PS-domain area. The MSC processes the handover from the PS-domain AN or the handover to the PS-domain AN. Through the present invention, the service handover is enabled under control of the MSC; when the user performs a call, the service handover is enabled between a PS-domain area and a CS-domain area, and therefore, the operators can fully use the PS-domain network coverage to provide more continuous services for the user, and improve the network utilization efficiency.

## Description

### CROSS-REFERENCE TO RELATED APPLICATION

This application claims priority to Chinese Patent Application No. 200710145121.5, filed with the Chinese Patent Office on August 23, 2007 and entitled "SYSTEM, APPARATUS, AND METHOD FOR USER SERVICE HANDOVER", which is incorporated herein by reference in its entirety.

### FIELD OF THE INVENTION

The present invention relates to the communication field, and in particular, to a system, an apparatus, and a method for user service handover.

### BACKGROUND OF THE INVENTION

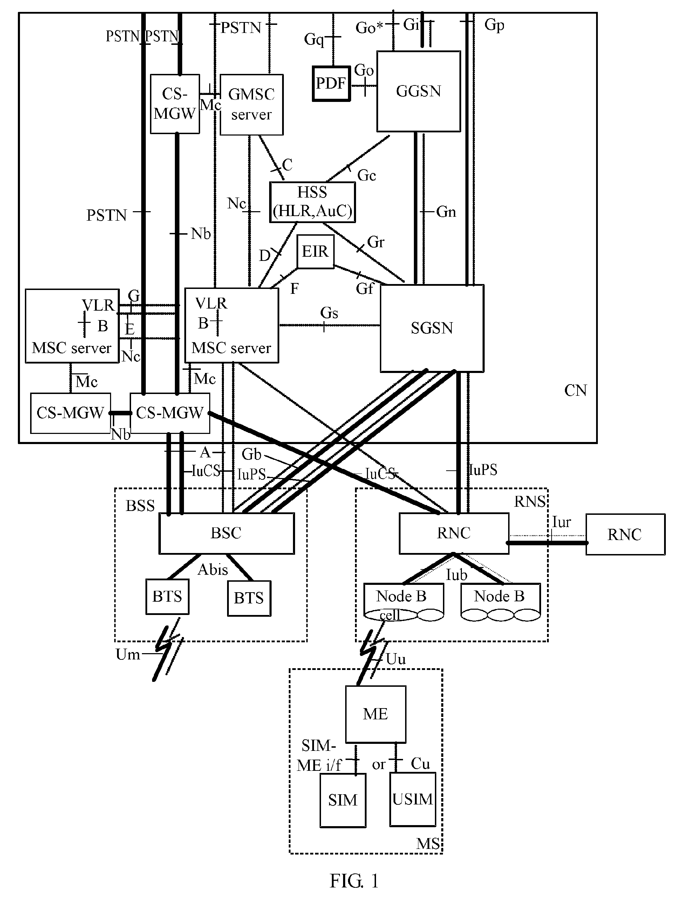

Currently, radio networks are categorized into many types, including Global System for Mobile Communications (GSM)/Wideband Code Division Multiple Access (WCDMA), Code Division Multiple Access 2000 (CDMA 2000), and Time Division-Synchronous Code Division Multiple Access (TS-CDMA). Such networks provide mobile services for users, and are similar with respect to the architecture and service capabilities. The architecture of a radio network is described below, taking a WCDMA network as an example. FIG. 1 shows a WCDMA network architecture in 3GPP TS23.002 V640. As shown in FIG. 1, the entities related to the present invention in the architecture include:
a Mobile Switching Center (MSC) server on the Core Network (CN) and a Circuit Switched Media Gateway (CS-MGW), both belonging to the CS-domain CN;
a Serving GPRS Support Node (SGSN, where GPRS is an acronym of General Packet Radio Service) and a Gateway GPRS Support Node (GGSN), both belonging to the Packet Switched (PS)-domain CN; and
a Base Station Subsystem (BSS) on an Access Network (AN), and a Radio Network Subsystem (RNS), both shared by the CS-domain CN and the PS-domain CN.

The CN controls services, checks service subscription, and provides service logic. The AN provides access capabilities for a user, provides basic signaling and media transmission channels for the user to obtain services, and thus is a basis for the user to obtain services.

In the process of handing over a CS-domain user service, the CS-domain handover aims to keep continuity of the service. Specifically, when the user moves from a radio coverage area to another area while the service is in progress, transmission resources are allocated to the user in the new area so that the ongoing service can be continued.

Currently, the CS-domain handover is categorized into many types. From the perspective of the handover scope, the CS-domain handover types include: handover of a User Equipment (UE) in a radio management entity such as a Base Station Controller (BSC) or a Radio Network Controller (RNC), handover between radio management entities under control of an MSC server, and handover between different MSC servers. From the perspective of the access network type before and after handover, the CS-domain handover types include: handover between a 2G network and a 3G network, handover on a 2G network, and handover on a 3G network.

The basic handover process is as follows:
1. Handover is initiated by a radio management entity, for example, an Evolved NodeB (eNodeB), an RNC, or a BSC. If the handover destination is within the scope of the entity, the handover takes place within the entity. If the handover destination is not in the scope of the entity, the radio management entity sends a handover request to a higher-level entity such as an MSC.
2. After the MSC receives the handover request, if the MSC finds that the handover destination is controlled by another MSC (target MSC), inter-MSC handover is initiated, and specifically, the target MSC sets up a radio access bearer and a bearer with the source MSC; if the MSC finds that the handover destination is within the scope of the MSC, intra-MSC handover is initiated, which means that the MSC instructs the target radio management entity to set up a radio bearer of the target coverage area.
3. The source MSC provides the radio bearer parameters of the target coverage area for the UE and instructs the UE to perform handover, and the UE then completes the handover.
4. After the UE completes the handover, the MSC may release the radio bearer which is previously occupied by the UE.

As the UE moves, the UE may be handed over repeatedly in a service process.

System Architecture Evolution (SAE) is a packet network architecture. The entities in the architecture include: a Mobility Management Entity (MME), a Packet Data Network (PDN) Gateway (GW), and a Policy Control and Charging Rules Function (PCRF). The SAE may be a roaming architecture or a non-roaming architecture. The SAE provides a relatively efficient packet transport network and Voice over Internet Protocol (VoIP) services for the user.

The SAE network form is shown below, taking a non-roaming architecture as an example.

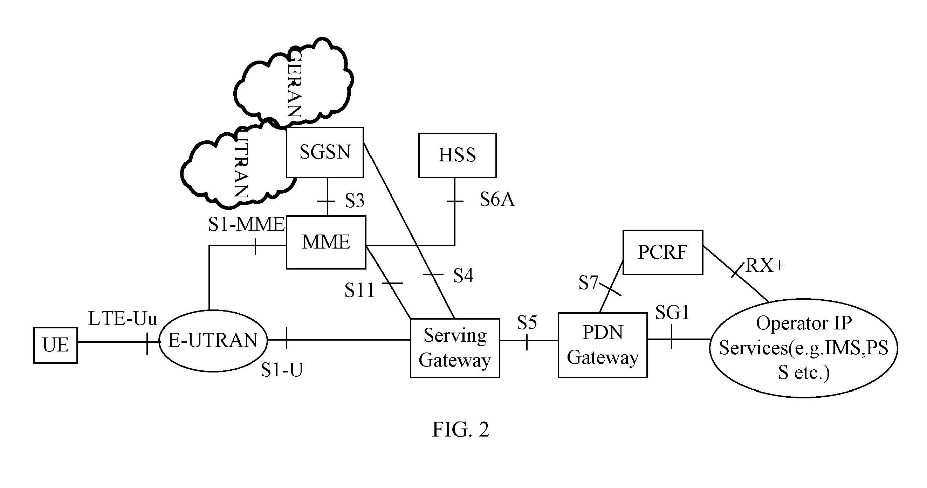

FIG. 2 shows a non-roaming SAE architecture. As shown in FIG. 2, the MME functions related to the present invention include: mobility management, for example, user attachment, and setup of an IP bearer of a participating user. The functions of the PDN GW include: IP address allocation management, bearer policy control, and data packet filtering. The functions of the eNodeB include: radio resource management, radio bearer setup, and triggering of PS-domain handover.

Currently, a solution to UE handover between the PS domain and the CS domain is IP Multimedia System (IMS) Voice Call Continuity (VCC).

The mechanism of this solution is that all calls of the user, which are initiated from the CS domain and the PS domain, are routed to a VCC Application Server (AS) of an IMS CN for anchoring, and that handover is implemented under control of the VCC AS. In the process of developing the present invention, the inventor finds that the handover function in the prior art is not available unless the operator deploys an IMS network. If the operator deploys no IMS network, when the user obtains a service (such as a voice call and a data call) through a CS-domain MSC and handover occurs, the handover is practicable between the areas covered by the CS domain, but is not practicable between a CS-domain area and a PS-domain area, or is not practicable between two PS-domain areas under control ofan MSC.

### SUMMARY OF THE INVENTION

Embodiments of the present invention provide a system, an apparatus, and a method for user service handover to enable handover related to a PS-domain AN under control of an MSC, including handover between a CS-domain area and a PS-domain area, and handover between two PS-domain areas.

A system for user service handover is provided in an embodiment of the present invention. The system includes: a PS-domain AN, an MSC, a UE, a packet access unit, and optionally, a CS-domain AN.

The packet access unit is connected to the PS-domain AN and the MSC, and is adapted to: set up a signaling (message transfer) channel (a message transfer channel) between the PS-domain AN in a PS domain and the MSC in a CS domain, and manage (create, modify, or delete) the signaling and media channel between the UE and the MSC.

The PS-domain AN is adapted to process the handover to a CS-domain area or a PS-domain area.

The CS-domain AN is adapted to process the handover to a CS-domain area or a PS-domain area.

The MSC is adapted to process the handover from the PS-domain AN or the handover to the PS-domain AN.

A method for user service handover is provided in an embodiment of the present invention. The method involves a PS-domain AN, an MSC, a UE, a packet access unit, and optionally, a CS-domain AN. The method includes the following steps:
by a radio management entity (such as an RNC, a BSC, and an eNodeB) in a CS domain or a PS domain, initiating handover, where either or both of the source and destination of the handover are located in the PS domain, and the PS-domain AN is connected to the MSC through the packet access unit;
by the MSC, preparing a bearer from the MSC to the handover destination;
instructing the UE to perform handover, whereupon the UE is handed over to the new bearer; and
releasing a bearer that previously exists between the MSC and the UE.

The embodiments of the present invention bring the following benefits:

In the embodiments of the present invention, the packet access unit provides the function of connecting the PS-domain AN to the MSC in the CS domain and the function of managing the service bearer channel between the UE and the MSC, and the MSC may control the handover from the PS-domain AN, and the handover to the PS-domain AN. Therefore, the service handover related to the PS-domain AN is enabled under control of the MSC. When the user performs a call, the handover related to the PS-domain area is enabled, and the operator can fully use the MSC to provide more continuous services for the user covered by a PS network, and improve the network utilization efficiency and the user experience.

### BRIEF DESCRIPTION OF THE DRAWINGS

FIG. 1 shows a WCDMA network architecture in 3GPP TS23.002 V640 in the prior art;
FIG. 2 shows a non-roaming SAE architecture of the prior art;
FIG. 3 shows a structure of a system for user service handover in an embodiment of the present invention;
FIG. 4 is a flowchart of implementing a call service between a UE and an MSC in an embodiment of the present invention;
FIG. 5 is a flowchart of UE handover from a PS domain to a CS domain in an embodiment of the present invention;
FIG. 6 is a flowchart of UE handover from a CS domain to a PS domain in an embodiment of the present invention;
FIG. 7 is a flowchart of a method for user service handover in an embodiment of the present invention;
FIG. 8 is a flowchart of UE handover from a PS domain to a CS domain in a first embodiment of the present invention;
FIG. 9 is a flowchart of an MME obtaining triggering conditions in an embodiment of the present invention;
FIG. 10 is a flowchart of transferring packet bearer initiator information in an embodiment of the present invention;
FIG. 11 is a flowchart of UE handover from a CS domain to a PS domain in a second embodiment of the present invention;
FIG. 12 is a flowchart of UE handover from a CS domain to a PS domain in a third embodiment of the present invention; and
FIG. 13 is a flowchart of UE handover from a PS domain to another PS domain in a fourth embodiment of the present invention.

### DETAILED DESCRIPTION OF THE INVENTION

The embodiments of the present invention are detailed below with reference to the accompanying drawings.

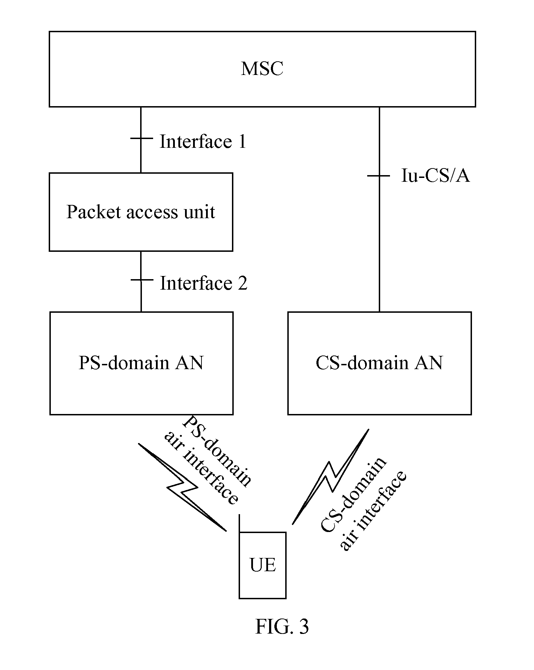

The embodiments of the present invention deal with the following issues: when a user obtains a service (such as a voice call and a data call) through a CS-domain MSC and the handover occurs, how to implement service handover between a CS-domain area and a PS-domain area and how to enable service handover between two PS-domain areas under control of the MSC.. It is easily understandable that the UE covered by a PS network is not necessarily covered by a CS domain concurrently when the handover occurs between different PS-domain areas. FIG. 3 shows a structure of a system for user service handover. As shown in FIG. 3, the handover system includes: a PS-domain AN, an MSC, a UE, a packet access unit, and optionally, a CS-domain AN.

The packet access unit is connected to the PS-domain AN and the MSC, and is adapted to: set up a signaling channel between the PS-domain AN in the PS domain and the MSC in the CS domain, and manage the service bearer channel for media transmission between the UE and the MSC.

The PS-domain AN includes but is not limited to the SAE, GPRS, or CDMA 2000 PS-domain network.

The packet access unit is a new entity. In practice, the packet access unit may be a logical entity or a physical entity. Currently, the traditional MSC supports only CS-domain access, and does not support PS-domain access. Due to the difference between PS-domain access and CS-domain access, if PS-domain access needs to be used by an MSC to provide services for the user, an entity is placed between the PS-domain AN and the MSC in an embodiment of the present invention to implement this function. This entity is called a packet access unit, which provides a signaling channel between the UE and the MSC and provides the message routing function, the bearer management function, and a function of adaptation between an Internet Protocol (IP) bearer and an Asynchronous Transfer Mode (ATM) bearer. From the perspective of implementation, this entity may be located in an MSC or a PS-domain AN, or exist independently. If this entity is located in an MSC, the traditional MSC is combined with the packet access unit to constitute an enhanced MSC.

The entities in the CS-domain AN include but are not limited to: RNC/NodeB, BSC/BTS, or eNodeB.

As shown in the figure, in practice, the MSC is connected to the packet access unit through interface 1, and the PS-domain AN is connected to the packet access unit through interface 2.

### Interface 1:

Interface 1 is an interface between an MSC and an packet access unit. This interface may be an external interface or an internal interface (if the packet access unit is integrated into an MSC, this interface is an internal interface). Formally, this interface may be an analog Iu interface, an analog A-interface, an analog Gs interface, or an interface of another type (such as the interface between the CN and the AN on a CDMA2000 network or a TD-SCDMA network). The connection relationship between an MSC and a packet access unit may be a one-to-one, one-to-many, many-to-one, or many-to-many relationship. It is easily understandable that the one-to-many relationship, many-to-one relationship, or many-to-many relationship are not applicable if this interface is an internal interface.

### Interface 2:

Interface 2 is an interface between a packet access unit and a PS-domain AN. Formally, this interface may be a Gi/SGi interface, an Rx+/Rx interface, or an interface added between the packet access unit and the MME, or any combination thereof, or may be an internal interface (if the packet access unit is integrated into a PS-domain AN, this interface is an internal interface), or an interface of another type. The connection relationship between a packet access unit and a PS-domain AN may be a one-to-one, one-to-many, many-to-one, or many-to-many relationship. It is easily understandable that the one-to-many relationship, many-to-one relationship, or many-to-many relationship are not applicable if this interface is an internal interface.

The handover system further includes a handover source and a handover destination. The handover source, or the handover destination, or both the handover source and the handover destination include a PS-domain AN.

The handover source is adapted to initiate handover to the handover destination.

The MSC is adapted to: receive the handover request from the handover source, initiate handover to the handover destination, prepare the bearer to the handover destination, and instruct the UE to perform handover to the bearer at the destination.

The handover destination is adapted to: receive the handover request of the MSC, and set up a bearer between the UE and the MSC for transmitting signaling and media after handover of the UE.

In practice, if the handover source in the handover system includes a PS-domain AN, the handover source further includes a packet access unit; if the handover destination includes a PS-domain AN, the handover destination further includes a packet access unit.

The packet access unit is adapted to: connect the MSC to the PS-domain AN, and manage the signaling channel and the media channel between the UE and the MSC.

The handover source may further include a handover initiating module, which is adapted to initiate handover. For the PS-domain AN, the handover initiating module is a radio management entity (such as an RNC, a BSC, and an eNodeB) in the PS-domain AN. For the CS-domain AN, the handover initiating module is a radio management entity (such as an RNC and a BSC) in the CS domain.

The handover source may further include a handover policy deciding module, which is adapted for the MME in the PS-domain AN to decide whether to initiate handover to the packet access unit.

If the handover source includes a packet access unit, the handover source may further include a packet access unit determining module, which is adapted for the MME in the PS-domain AN to determine the target packet access unit that initiates the handover when one or more packet access units exist.

The signaling channel between the packet access unit and the MSC is connected through an analog Iu interface, an analog A-interface, an internal interface, or any combination thereof. The signaling channel between the packet access unit and the UE is formed in one of the following modes:
1. If the UE has been attached to the PS-domain AN before handover, the existing signaling channel between the UE and the MME is combined with the signaling channel between the MME and the packet access unit to constitute the signaling channel between the UE and the packet access unit.
2. If the UE has been attached to the PS-domain AN before handover, the existing IP bearer between the UE and the PDN GW or the IP bearer that is newly set up at the time of handover is combined with the Gi interface or SGi interface to constitute a signaling channel between the UE and the packet access unit.
3. If the UE has not been attached to the PS-domain AN before handover, the packet access unit initiates setup of an IP bearer to the UE when the UE is handed over to a PS-domain area. The method for setting up the IP bearer is as follows: The packet access unit initiates setup of a signaling channel bearer to a Policy Decision Function (PDF) or a PCRF (the two entities are hereinafter referred to as "policy decision entity"), and the policy decision entity initiates setup of a signaling channel bearer to the PDN GW. The PDN GW allocates an IP address to the UE, and further initiates setup of a signaling channel bearer to a radio management entity, and sets up a bearer between the PDN GW and the radio management entity. The radio management entity allocates radio resources over the signaling channel to the UE, and returns description information of the radio resources to the packet access unit. The packet access unit provides the description information of the radio resources to the MSC, which provides the description information of the radio resources to the UE through the signaling channel at the handover source, and the UE uses the description information of the radio resources to set up a radio bearer between the UE and the radio management entity. This radio bearer is combined with the existing signaling channel bearer between the packet access unit and the radio management entity to constitute a signaling channel between the UE and the packet access unit.

The packet access unit in the handover system manages (for example, creates, modifies, and deletes) the media channel between the UE and the MSC. The packet access unit may set up a media channel between the UE and the MSC in one of the following modes:
Mode 1: If the UE has been attached to the PS-domain AN before handover, the existing IP bearer between the UE and the PDN GW or the IP bearer that is newly set up at the time of handover is combined with the Gi interface or SGi interface to constitute a media channel between the UE and the MSC.
Mode 2: If the UE is not attached to the PS-domain AN before handover, the packet access unit initiates setup of a new IP bearer to the UE when the UE is handed over to a PS-domain area. The method for setting up the IP bearer is as follows: The packet access unit initiates setup of a media channel bearer to a policy decision entity, and the policy decision entity initiates setup of a media channel bearer to the PDN GW. The PDN GW allocates an IP address to the UE, and further initiates setup of a media channel bearer to a radio management entity, and sets up a bearer between the PDN GW and the radio management entity. The radio management entity allocates radio resources over the media channel to the UE, and returns description information of the radio resources to the packet access unit. The packet access unit provides the information to the MSC. The MSC provides the information to the UE through the media channel at the handover source, and the UE uses the information to set up a radio bearer between the UE and the radio management entity. This radio bearer is combined with the existing media channel bearer between the packet access unit and the radio management entity to constitute a media channel between the UE and the packet access unit.

In practice, the handover initiating module may initiate handover to the target area according to quality of radio signals in the target CS-domain area or target PS-domain area that covers the UE.

The handover policy deciding module decides whether to initiate handover according to existence of any bearer whose setup is initiated by the packet access unit among bearers set up for the UE. If such a bearer exists, the handover policy deciding module initiates handover to the packet access unit.

The packet access unit determining module in the handover system determines the packet access unit that initiates setup of the PS-domain access bearer to be the target packet access unit that sends the handover request. The packet access unit determining module may also record the identifier of the packet access unit when the packet access unit initiates setup of the PS-domain access bearer, so that the MME can know which packet access unit it sends the handover request to when the handover from the PS domain to the CS domain occurs.

In practice, after the user sets up a call under control of the MSC through a PS domain, when the UE is handed over from one PS-domain area to another PS-domain area, if the MME changes, a old MME may transfer the recorded identifier of the packet access unit to a new MME so that the new MME can initiate handover to the packet access unit.

An apparatus for user service handover is provided in an embodiment of the present invention. The apparatus is adapted to set up an IP bearer to the UE when the UE is handed over from another area to a PS-domain area. If the UE is not attached to the PS-domain AN when the handover occurs, the apparatus allocates an IP address to the UE when receiving a bearer setup instruction from the policy decision entity, and then provides the IP address information to the packet access unit. In this way, the packet access unit can transfer signaling messages to the UE.

An apparatus for user service handover may transfer an instruction of UE handover under control of the MSC when the apparatus is located at the handover destination. The packet access unit transfers the instruction through the signaling channel between the packet access unit and the UE, or, when the packet access unit exercises control to set up the PS-domain access bearer, the bearer setup signaling carries the instruction. In this way, the UE is handed over to a new bearer.

The embodiments of the present invention are described below in two parts. Part 1 is about implementation of UE handover from a PS domain to a CS domain, and part 2 is about implementation of UE handover from a CS domain to a PS domain.

Part 1: The UE is handed over from a PS domain to a CS domain:
The UE accesses aMSC through a PS domain, and uses the PS-domain AN to perform a call service under control of the MSC.

The UE uses the PS-domain AN to perform the call service under control of the MSC. The UE needs to update its location in the MSC or a VLR unless the service is an emergency call service.

The UE may update its location in the MSC or the VLR in the following way:
A message transfer channel is set up between the UE and the MSC, and then the UE uses the message transfer channel to exchange location update messages with the MSC., Therefore, the UE can update its location in the MSC or the VLR.

The message transfer channel may be set up in either of the following two modes:
Mode A: The message transfer channel passes through the PDN GW, and therefore, the message transfer channel is a channel connected up through the UE, the PDN GW, the packet access unit, and the MSC. The channel between the UE and the PDN GW may use the IP bearer located between the UE and the PDN GW and provided by the PS-domain AN. The channel between the PDN GW and the packet access unit may use a Gi interface or an SGi interface, and the channel between the packet access unit and the MSC may use an analog Iu/A interface or other interfaces.
Mode B: The message transfer channel passes through the MME on the PS-domain AN, and therefore, the message transfer channel is a channel connected up through the UE, the MME, the packet access unit, and the MSC. The channel between the UE and the MME may be an existing signaling channel between the UE and the MME, and the channel between the MME and the packet access unit is a newly added channel in the present invention, and the channel between the packet access unit and the MSC is the same as that in mode A.

For the mode A and mode B above, the packet access unit may serve as a logical function entity in the MSC, and therefore, the channel between the packet access unit and the MSC belongs to an internal interface between them, and the mode of the channel in the internal interface may be different from the modes described above.

After the UE updates its location in the MSC or the VLR through the PS-domain AN, the UE may use the PS-domain AN to perform services under control of the MSC. For the call service, the service is performed in the following mode (supposing that the user is a calling party):

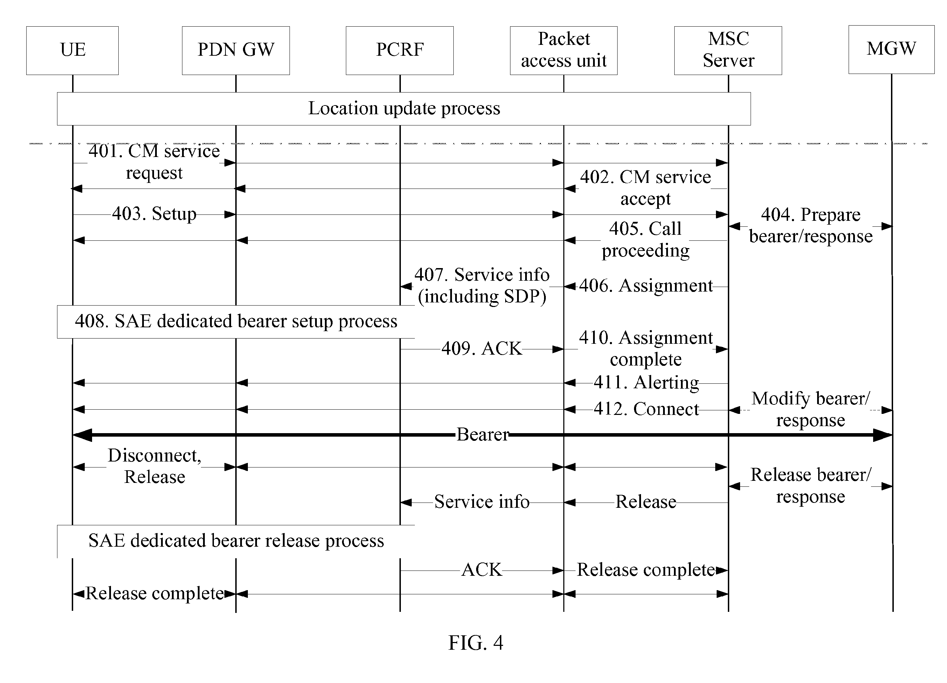

FIG. 4 is a flowchart of implementing a call service between the UE and the MSC. As shown in FIG. 4, the UE may exchange call-related messages with the MSC through a channel that is the same as the message transfer channel related to location update. The process includes the following steps:
   Step 401: The UE sends a CM service request message toan MSC.
   Step 402: The MSC sends a CM service accept message to the UE.
   Step 403: The UE sends a Setup message to the MSC. Because the UE accesses the MSC through a PS-domain AN rather than a CS domain, the message needs to additionally carry description information of the media to be set up at the UE side. The description information includes the IP address and port number, or the code information, or both. After receiving the message, the packet access unit may remove the IP address and port number information in the message before sending the message to the MSC to reduce the modification to the existing MSC.
   Step 404: The MSC prepares the local bearer resources.
   Step 405: The MSC sends a Call Proceeding message to the UE. The message carries MSC-side media description information, for example, IP address and port number, or ATM address information.
   Step 406: The MSC sends an Assignment message to the packet access unit. The message carries parameters of the bearer to be set up for the UE, including description information of the media bearer to be set up, for example, Quality of Service (QoS) requirements of the channel, and network-side address information. If an IP bearer exists between the MSC and the packet access unit, the network-side address information may be information about the IP address and port number corresponding to the IP bearer allocated by the MSC. If an ATM bearer exists between the MSC and the packet access unit, the packet access unit allocates IP bearer resources and ATM bearer resources to convert the bearer between the UE and the MSC, and therefore, the network-side address information is the address corresponding to the ATM bearer allocated by the MSC.
   Step 407: The packet access unit sends a service request to the policy decision entity on the PS-domain AN.
   Step 408: The PS-domain AN sets up an IP bearer for the UE.
   Step 409: The policy decision entity on the PS-domain AN sends a service request response to the packet access unit.
   Step 410: The packet access unit sends an Assignment Complete message to the MSC. If an IP bearer exists between the MSC and the packet access unit, the message carries the IP address and port number described in step 3. If an ATM bearer exists between the MSC and the packet access unit, the packet access unit provides the ATM address information at the packet access unit to the MSC through an access link control application protocol.
   Step 411: The MSC sends an Alerting message to the UE.
   Step 412: The MSC sends a Connect message to the UE. Now, the call between the UE and the MSC is set up successfully.

The steps subsequent to step 412 in the figure are a user media communication process and a disconnection process at the time of call completion.

After the user sets up a service through a PS-domain AN under control of the MSC, to support handover from a PS-domain radio coverage area to a CS-domain radio coverage area, the process may be as follows:

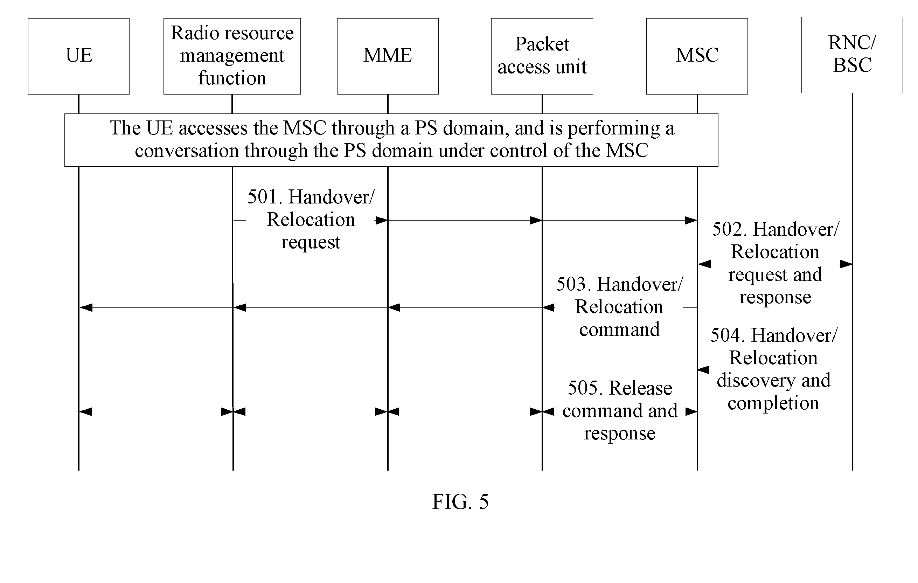

FIG. 5 is a flowchart of UE handover from a PS domain to a CS domain. The handover process is described below.
   Step 501: The MME (SGSN or MME) on the PS-domain AN receives a handover request from the radio management entity such as the eNodeB, RNC or BSC, and the MME initiates handover to the CS domain to the packet access unit. The packet access unit sends the handover request to an MSC.
   Step 502: The MSC prepares the bearer resources from the MSC to the target area, including the radio access bearer in the target area, and the inter-MSC bearer when the handover occurs between MSCs.
   Step 503: The MSC instructs the UE to perform handover. The UE is handed over to the target area, and the user communicates with the peer through a CS-domain bearer.
   Step 504: The RNC or the BSC sends a Handover/Relocation Discovery and Completion message to the MSC.
   Step 505: The old bearer is released (namely, the bearer existing between the MSC and the UE before the handover).

The features of the foregoing steps are further described below.

### Feature 1: Triggering of handover.

In step 501, the PS-domain radio management entity may send a handover request to the MME according to quality of radio signals of the CS-domain area that covers the UE. The target area is an area covered by the CS domain.

### Feature 2: Triggering of handover - using the request for handover between PS domains.

If the target area provides the capabilities of accessing both the CS domain and the PS domain, when the radio resource management module initiates handover from the PS domain to another PS domain to the MME according to the existing processing procedure, the MME may map the request for handover within a PS domain to a request for handover from a PS domain to a CS domain in step 501, and the MME sends a request for handover to the CS domain.

### Feature 3: Determining of the target packet access unit.

In step 501, if the MME is connected to the packet access unit in a one-to-one relationship, the MME sends the handover request to a unique packet access unit by configuring an address of the packet access unit in the MME.

However, if an MME is connected to one or more packet access units, a packet access unit determining unit may be set to determine the target packet access unit to which the MME sends the handover request. The packet access unit determining unit is connected to the MME.

The packet access unit determining unit may include: a first packet access unit determining module, and/or a second packet access unit determining module.

The first packet access unit determining module is adapted to determine the target packet access unit according to the target packet access unit identifier provided when the MME initiates setup of the PS-domain access bearer to the packet access unit (the bearer refers to the bearer between the UE and the PDN GW (GGSN or PDN GW), and refers to more than the radio bearer).

The second packet access unit determining module is adapted to determine the target packet access unit according to the mapping relationship between the location area set up by the MME and the packet access unit corresponding to the area, and according to the current location area of the user.

In practice, to determine the target packet access unit, when the packet access unit initiates setup of the PS-domain access bearer, the MME affixes an identifier to identify the packet access unit corresponding to the PS-domain access bearer. Therefore, when handover occurs, the MME can confirm the target packet access unit, and initiate handover to the packet access unit.

Alternatively, in step 501, the MME determines the target packet access unit according to the preset (configured) mapping relationship between the location area and the packet access unit corresponding to the area, and according to the current location of the user; and initiates handover to the packet access unit.

### Feature 4: One handover request is split into two handover requests, one for handover to the CS domain and the other for handover to the PS domain.

In the feature 2, if the bearers set up for the UE include the bearer set up by the packet access unit, and include the bearer set up by units other than the packet access unit, when a handover request from the radio management entity is mapped to a request for handover from the PS domain to the CS domain, the bearer set up by units other than the packet access unit may undergo the handover processing according to the existing mode of handover between PS domains.

### Feature 5: The MSC discovers the call corresponding to the handover.

In step 501, because many calls may be in progress in the MSC simultaneously, the MSC needs to discover the call corresponding to the handover request, with a view to performing handover operations for such call. The MSC may use the packet access unit to discover the call corresponding to the handover request. The packet access unit may discover the call corresponding to the handover request in one of the following modes:
Mode 1: The handover request sent by the MME to the packet access unit carries bearer information (such as the IP address and port number for receiving and sending media). The packet access unit compares the bearer information with the description information of the bearer set up at the time of setting up the call. If the bearer information is the same as the description information of the bearer, the call corresponding to the handover request is discovered.
Mode 2: The handover request sent by the MME to the packet access unit carries user identity information such as an International Mobile Subscriber Identifier (IMSI). According to the information and the mapping relationship between the call and the user identity information stored at the time of setting up the call, the packet access unit discovers the call corresponding to the handover request, or the packet access unit sends a handover request that carries IMSI information to the MSC, and the MSC finds the call corresponding to the handover according to the IMSI.

### Feature 6: The PS-domain access bearer set up by the packet access unit is differentiated from the ordinary PS-domain access bearer.

In the feature 1 and feature 2, the MME needs to initiate handover to the CS domain only if a bearer set up under control of the packet access unit exists in the UE. Therefore, the MME judges whether it is necessary to initiate the handover before initiating the handover to the CS domain to the packet access unit. The judgment method is: The MME judges whether the bearers involved in the handover include the bearer set up under control of the packet access unit, and initiates the handover to the CS domain only if such a bearer exists. The MME judges whether the bearers involved in the handover include the bearer set up under control of the packet access unit in this way: When the packet access unit initiates setup of the PS-domain access bearer, the MME needs to affix an identifier to identify that the bearer is set up by the packet access unit. The MME may add identifier information to the message indicative of setting up a bearer to identify the bearer.

In practice, the handover system may include a judging unit connected to the MME. When the judging unit determines that the new bearer is set up by the packet access unit, the judging unit triggers the MME to send a request for handover to the CS domain.

### Feature 7: Policy of handover to a CS domain or a PS domain.

In step 501, if the target area is covered by both the CS domain and the PS domain, the MME may:
initiate handover only to the CS domain; or
initiate handover only to the PS domain.

The MME attempts the handover to the CS domain first, and, if the attempt fails, attempts the handover to the PS domain; or attempts the handover to the PS domain first.

When the MME attempts the handover to the CS domain and the handover to the PS domain simultaneously, if the destination allows both the handover to the CS domain and the handover to the PS domain, the MME selects either of them and gives up the other; if the destination allows either the handover to the CS domain or the handover to the PS domain, the MME selects the allowed handover.

### Feature 8: Supplement to the handover process when the UE is handed over in the PS domain.

In the feature 3 and feature 6, the MME records information about the packet access unit corresponding to the bearer. If the UE is handed over within the PS domain and the MME changes, the old MME needs to transfer the information to the new MME so that the new MME can initiate handover to the CS domain. Specifically, when the old MME sends a handover request to the new MME, the handover request carries the information.

In practice, the handover system may further include an information transferring unit connected to the MME. The information transferring unit transfers the recorded information about the packet access unit corresponding to the bearer to the new MME after the UE is handed over within the PS domain.

Part 2: The UE is handed over from a CS domain to a PS domain:

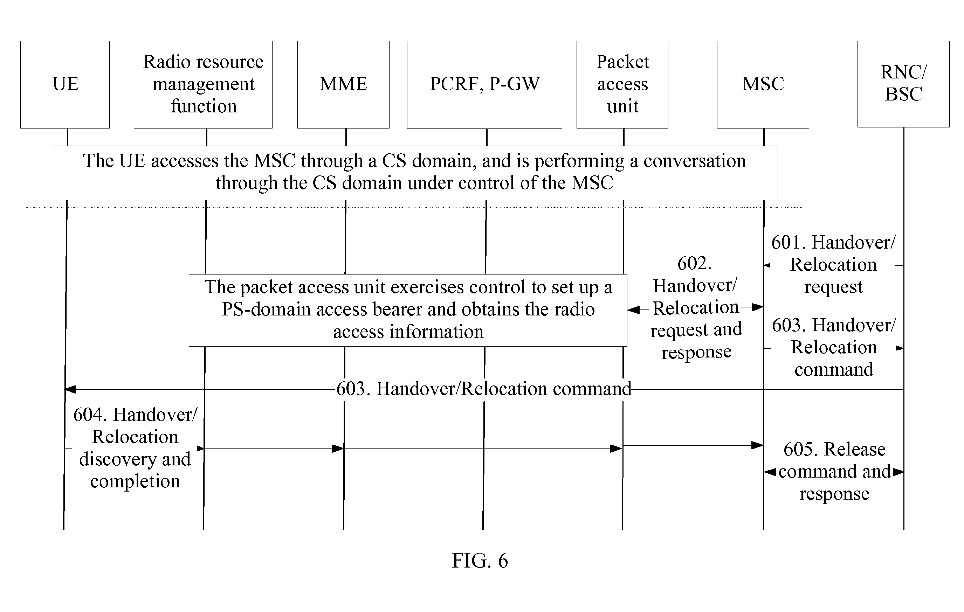

In practice, the UE accesses the MSC through a CS domain, and communicates through a CS-domain AN under control of the MSC. FIG. 6 is a flowchart of UE handover from a CS domain to a PS domain. The handover process is described below.
Step 601: The MSC receives a handover request from a radio management entity (such as an RNC or a BSC).
Step 602: The MSC initiates handover to the PS domain to the packet access unit. The MSC prepares the bearer resources from the MSC to the target PS-domain area (including the PS-domain access bearer in the target area, and the inter-MSC bearer when the handover occurs between MSCs).
Step 603: The MSC instructs the UE to perform handover.
Step 604: The UE is handed over to the target area, and the user communicates with the peer through the PS-domain access bearer.
Step 605: The old bearer is released (namely, the bearer existing between the MSC and the UE before the handover).

The features of the foregoing steps are further described below.

### Feature 1: Triggering of handover to the CS domain.

In step 601, the CS-domain radio management entity sends a handover request to the MSC according to quality of radio signals in the PS-domain area that covers the UE, requesting to perform handover from the CS domain to the PS domain.

### Feature 2: Determining of the target packet access unit.

In step 602, the MSC may determine the target packet access unit according to the preset (configured) mapping relationship between the target PS-domain area (which may be mapped to a pseudo CS-domain location area) and the packet access unit under the MSC, and according to the target area information in the handover request from the radio management entity, and further initiate handover to the packet access unit. If the MSC is connected to only one packet access unit, the MSC may send the handover request to a unique packet access unit.

### Feature 3: The MSC obtains description information of the radio bearer in the PS-domain access bearers.

In steps 602 and 603, when the MSC prepares the new bearer of the PS-domain AN through the packet access unit, the MSC may further obtain radio bearer description information of the new bearer (the information may be the same as the bearer description information in the case that the UE is handed over within a PS domain, and is primarily the parameters of the new radio bearer, including the channel frequency). In step 602, the MSC notifies the information to the UE through a CS-domain signaling channel so that the UE can perform handover according to the radio bearer description information. The MSC may obtain the radio bearer description information in the following way:

When setting up a new bearer, the MME obtains the description information of the radio bearer allocated by the radio resource management function, and provides the radio bearer description information to the packet access unit. The packet access unit further provides the information to the MSC.

If the setup of the PS-domain access bearer is not initiated by the packet access unit, such information may be not required. Therefore, to eliminate the blindness of the MME in providing the information, the MME may provide the information conditionally in the following way:

The packet access unit sends instruction information when setting up the bearer, and the instruction information indicates the need of returning such information. The MME judges whether to provide the information according to the instruction information.

Alternatively, the MME finds that the bearer setup initiator is a packet access unit according to the configuration information (for example, a special link set up between the MME and the packet access unit), and provides the information.

Alternatively, the packet access unit sends a special message (such as a handover request message) to obtain the information from the MME.

Specifically, the handover system may further include a feedback unit connected to the MME. The feedback unit is adapted to feed back the radio bearer information to the MSC after the MME sets up the PS-domain access bearer when the UE is handed over from a CS domain to a PS domain.

The handover system may further include a triggering unit. The triggering unit is connected to the feedback unit, and is adapted to trigger the feedback unit to feed back the radio bearer information if determining the necessity of feeding back the radio bearer description information to the MSC.

The triggering unit may make the judgment according to the instruction information sent by the packet access unit when setting up the bearer, or MME configuration information, or an instruction message of the packet access unit, or any combination thereof.

Feature 4: A signaling channel that passes through the packet access unit is set up between the UE and the MSC.

In step 603, the MSC may select a CS-domain signaling channel or a PS-domain signaling channel for notifying the UE to perform handover. If the MSC selects a PS-domain signaling channel, the MSC needs to set up a signaling channel between the UE and the MSC before step 603. This signaling channel passes through the packet access unit, and is also available for transmitting service messages between the UE and the MSC after the UE handover.

The signaling channel that passes through the packet access unit may be set up between the UE and the MSC in the following way:

The signaling channel that is located between the UE and MSC and passes through the packet access unit includes two sections: One section is between the MSC and the packet access unit, and may use an analog Iu interface, or an analog A-interface, or an internal interface; and the other section is between the packet access unit and the UE.

### For the latter section:

If the UE has been attached to the PS domain before the handover, the signaling channel may be the same as the channel for transmitting the location update message mentioned above. If the channel passes through a PDN GW, the packet access unit needs to query the MME for the IP address of the UE, or the MME provides the IP address of the UE to the packet access unit actively (when the UE is attached to the PS-domain AN).

If the UE is not attached to the PS domain before the handover, a new IP bearer between the UE and the PDN GW may be set up for the UE, and a signaling channel between the UE and the packet access unit may be formed through a Gi interface or an SGi interface.

The method for setting up a new IP bearer between the UE and the PDN GW for the UE in the case that the UE is not attached to the PS domain is as follows:

The packet access unit initiates setup of a signaling channel through a policy decision entity (PDF or PCRF) on the PS-domain AN.

The policy decision entity initiates setup of a signaling channel IP bearer to the PDN GW. The PDN GW allocates an IP address to the user.

The PDN GW sets up a bearer from the PDN GW to the radio resource management function (such as an RNC, a BSC, and an eNodeB) in the PS domain. In this process, the description information of the radio bearer allocated by the radio resource management function to the signaling channel is provided to the policy decision entity.

The policy decision entity provides feedback about a signaling channel setup result to the packet access unit. If the setup succeeds, the result carries the information about the IP address allocated to the user, and the radio bearer description information. Such information may be notified by the packet access unit to the MSC, and the MSC provides the information to the UE through a CS-domain signaling channel. Through such information, the UE can be handed over to the signaling channel of the PS-domain AN.

### Feature 5: Anew media channel between the UE and the MSC is set up.

The media channel comes in two scenarios: The MSC uses an ATM bearer, or the MSC uses an IP bearer.

If the MSC uses an ATM bearer, the media channel is made up of: an ATM bearer between the MSC and the packet access unit, a Gi interface or SGi interface between the packet access unit and the PDN GW, and an IP bearer between the PDN GW and the UE. The ATM bearer between the MSC and the packet access unit is implemented through an analog Iu interface. The IP bearer between the PDN GW and the UE may be set up by setting up a new dedicated bearer or PDP context, or set up by modifying an existing dedicated bearer or PDP context if the UE has been attached to the PS-domain AN before the handover. If the UE is not attached to the PS-domain AN before the handover, the mode of setting up the signaling channel in the case that the UE is not attached to the PS-domain AN before the handover in feature 4 is applicable to setup of the IP bearer between the PDN GW and the UE.

If the MSC uses an IP bearer, the difference from an ATM bearer is that: no ATM bearer between the packet access unit and the MSC exists, and the Gi interface or the SGi interface connects the PDN GW to the MSC.

Feature 6: The MSC instructs the UE to substitute a new bearer for the old CS-domain bearer. In step 603, if the UE has been attached to the PS-domain AN before the handover, the MSC may use the signaling channel that passes through the packet access unit and is located at the handover destination to instruct the UE to substitute the new bearer for the old CS-domain bearer; or, the MSC may use the signaling channel at the handover source to instruct the UE to substitute the new bearer for the old CS-domain bearer; or, the MSC may send a media bearer setup signaling message that instructs the UE to substitute the new bearer for the old CS-domain bearer when setting up a media bearer. More specifically, the packet access unit provides the handover information when setting up a media channel bearer through a policy decision entity. The handover information instructs the UE to substitute the new bearer for the CS-domain bearer. The handover information is carried in the media channel bearer setup message and transferred to the UE.

A method for user service handover is provided in an embodiment of the present invention. The method is described below with reference to accompanying drawings.

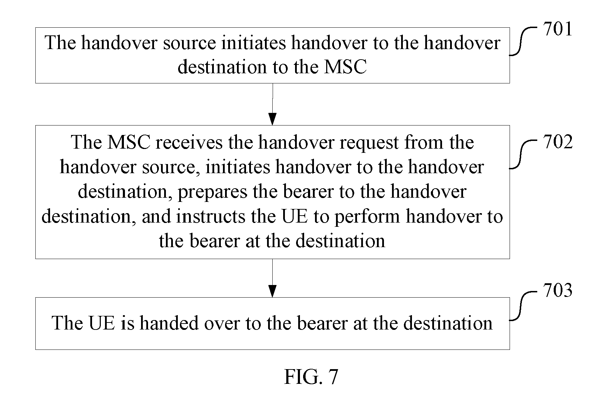

FIG. 7 is a flowchart of a method for user service handover. The method for user service handover involves a handover source, an MSC, a handover destination, and a UE. Either or both of the handover source and the handover destination include a PS-domain AN. As shown in FIG. 7, the service handover process may include the following steps:
Step 701: The handover source initiates handover to the handover destination to the MSC.
Step 702: The MSC receives the handover request from the handover source, initiates handover to the handover destination, prepares the bearer to the handover destination, and instructs the UE to perform handover to the bearer at the destination.
Step 703: The UE is handed over to the bearer at the destination.

Specifically, the radio management entity (such as an RNC, a BSC, or an eNodeB) in the CS domain or the PS domain initiates handover. Either the handover source or the handover destination or both are located in the PS domain. The PS-domain AN is connected to the MSC through a packet access unit. The MSC prepares the bearer from the MSC to the handover destination. The MSC instructs the UE to perform handover, and the UE is handed over to the new bearer. The old bearer (namely, the bearer existing before the handover) between MSC and the UE is released.

In practice, if the handover source includes a PS-domain AN, the handover source may initiate handover to the handover destination to the MSC in the following way:

The radio management entity at the handover source sends a handover request to the MME; the MME sends the handover request to the packet access unit; and the packet access unit sends the handover request to the MSC.

If multiple packet access units are connected to the MME, before the MME sends a handover request to the packet access unit, the MME may further determine the target packet access unit in the following way:

When the packet access unit initiates setup of a PS-domain access bearer, the identifier of the packet access unit is recorded, and is used to indicate the target packet access unit at the time of handover; or the mapping relationship between the user location information and the packet access unit is configured at the packet access unit, and the MME determines the packet access unit according to the current location information of the user.

In practice, if the handover destination includes a PS-domain AN, the MSC may prepare the bearer to the handover destination in the following way:

The MSC sends a handover request to the packet access unit.

The packet access unit instructs the policy decision entity to initiate setup of an IP bearer. The policy decision entity exercises control to set up an IP bearer.

If the UE is not attached to the PS-domain AN when the handover occurs, the policy decision entity may exercise control to set up an IP bearer in the following way:

The policy decision entity sends a bearer setup instruction to the PDN GW.

The PDN GW allocates an IP address to the UE.

The PDN GW sets up an IP bearer between the PDN GW and the radio management entity. The radio management entity allocates radio bearer resources to the UE, and provides description information of the resources to the packet access unit. The description information is further provided to the MSC. The MSC provides the information to the UE through a signaling channel at the handover source, and the UE sets up a bearer between the UE and the radio management entity.

In practice, the method for setting up an IP bearer is also applicable to setup of a signaling channel at the handover destination.

In practice, if the UE has been attached to the PS-domain AN when the handover occurs, the packet access unit obtains the IP address of the UE first, and then initiates setup of an IP bearer to the UE to the policy decision entity.

The packet access unit may obtain the IP address of the UE in this way: The packet access unit queries the MME on the PS-domain AN for the IP address of the UE, or the MME sends the IP address of the UE to the packet access unit before the handover occurs.

In practice, the MSC may instruct the UE to perform handover to the bearer at the destination in this way:

Through the signaling channel at the handover source, the MSC instructs the UE to perform handover to the bearer at the destination; or through the signaling channel at the handover destination, the MSC instructs the UE to perform handover to the bearer at the destination; or when the packet access unit initiates setup of a new destination-side bearer, the packet access unit notifies the UE to perform handover to the destination-side bearer through a bearer setup signaling message.

In practice, the packet access unit may be independent, or combined with the PS-domain AN, or combined with the MSC. When the packet access unit is combined with the MSC, they constitute an enhanced MSC.

In practice, the MSC may be in a split architecture, namely, composed of an MSC server and a Media Gateway (MGW), or may be in an integrated architecture.

An apparatus for user service handover is provided in an embodiment of the present invention. The apparatus includes: a packet access unit, an address allocating unit, and a sending unit.

The packet access unit is adapted to set up an IP bearer to the UE when the UE is handed over from another area to a PS-domain area.

The address allocating unit is adapted to allocate an IP address to the UE upon receiving a bearer setup instruction from the policy decision entity if the UE is not attached to the PS-domain AN when the handover occurs.

The sending unit is adapted to provide the IP address information to the packet access unit, whereupon the packet access unit transmits signaling messages to the UE according to the IP address information.

The apparatus for user service handover or the PDN GW sets up an IP bearer to the UE when the UE is handed over from another area to a PS-domain area. If the UE is not attached to the PS-domain AN when the handover occurs, the address allocating unit allocates an IP address to the UE upon receiving a bearer setup instruction from the policy decision entity, and then provides the IP address information to the packet access unit. In this way, the packet access unit can transmit signaling messages to the UE.

Another apparatus for user service handover is provided in an embodiment of the present invention. The apparatus includes an information transferring unit and a packet access unit.

The information transferring unit is adapted to transfer an instruction of UE handover controlled by the MSC when the apparatus is located at the handover destination.

The packet access unit is adapted to: set up a signaling channel with the UE, and transmit the instruction through the signaling channel.

The apparatus for user service handover may also include an information transferring unit and a packet access unit.

The information transferring unit is adapted to transfer an instruction of UE handover controlled by the MSC when the apparatus is located at the handover destination.

The packet access unit is adapted to: control setup of a PS-domain access bearer channel, and add the instruction to the signaling for setting up the PS-domain access bearer channel. The instruction instructs the UE to perform handover to the new bearer.

The apparatus for user service handover or the packet access unit transmits an instruction of UE handover under control of the MSC when the apparatus or the unit is located at the handover destination. The packet access unit transmits the instruction through the signaling channel between the packet access unit and the UE, or, when the packet access unit exercises control to set up the PS-domain access bearer, the bearer setup signaling carries the instruction. In this way, the UE is handed over to the new bearer.

A embodiments of the present invention are detailed below.

### First Embodiment

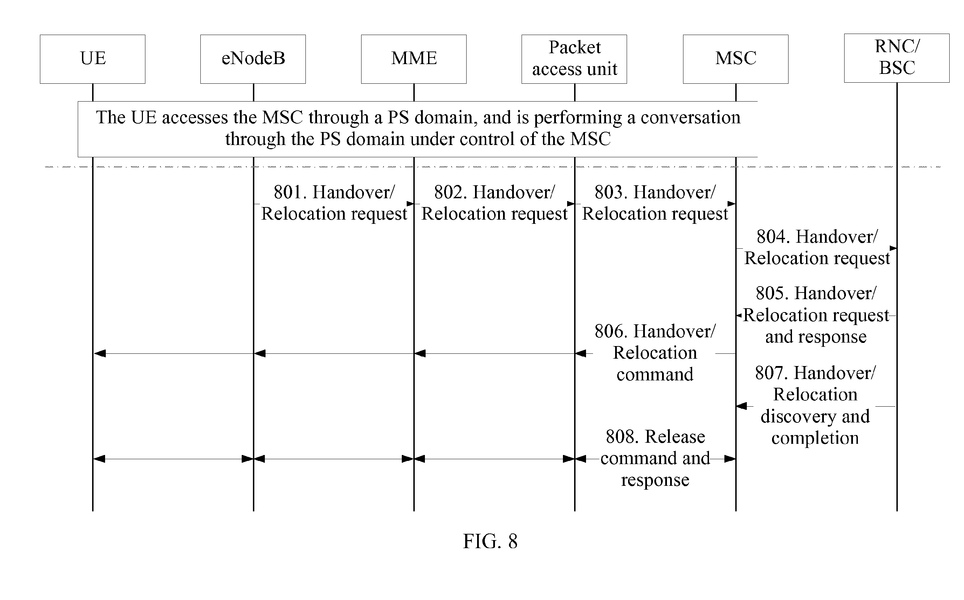

FIG. 8 is a flowchart of UE handover from a PS domain to a CS domain in the first embodiment of the present invention. This embodiment supposes that the CN is a WCDMA R4 network, and that the PS-domain AN is an SAE network. As shown in FIG. 8, when the user performs a conversation through an SAE packet network under control of the MSC (including the MSC server and the MGW), the UE is handed over. The handover process may include the following steps:
Step 801: A eNodeB sends a handover/relocation request to a MME.
Step 802: The MME sends a handover/relocation request to the packet access unit.
Step 803: The packet access unit sends a handover/relocation request to the MSC server.
Step 804: The MSC server discovers that the destination area is in the CS-domain area served by the MSC server, and therefore, sends the handover/relocation request to the BSC/RNC corresponding to the target area.
Step 805: The BSC/RNC returns a handover/relocation response message to the MSC server. The response message carries the description information of the radio bearer allocated to the target area.
Step 806: The MSC server sends a message to instruct the UE to perform handover, and provides radio bearer description information to the UE. The message passes through the packet access unit, the MME, and the eNodeB.
Step 807: The UE performs handover; the RNC/BSC detects the handover; and the RNC/BSC sends a handover completion instruction to the MSC server.
Step 808: The MSC server exercises control to release the bearer between the UE and the MGW, where the bearer passes through the PS-domain AN. Specifically, the packet access unit releases the dedicated bearer set up for this call on the SAE network after receiving the release command from the MSC.

In practice, when the MME initiates handover to the CS domain, the handover may be triggered unconditionally. However, to prevent invalid handover requests, the handover may be triggered conditionally. If the handover is triggered conditionally, the triggering condition is to check whether a bearer set up by the CS-domain CN device (such as an MSC) exists in the old PS-domain access bearers. If any such bearer exists, it is necessary to initiate handover to the CS domain. When the MME initiates setup of the PS-domain access bearer at the packet access unit, the MME affixes an identifier which indicates that the setup of the bearer is initiated by the packet access unit.

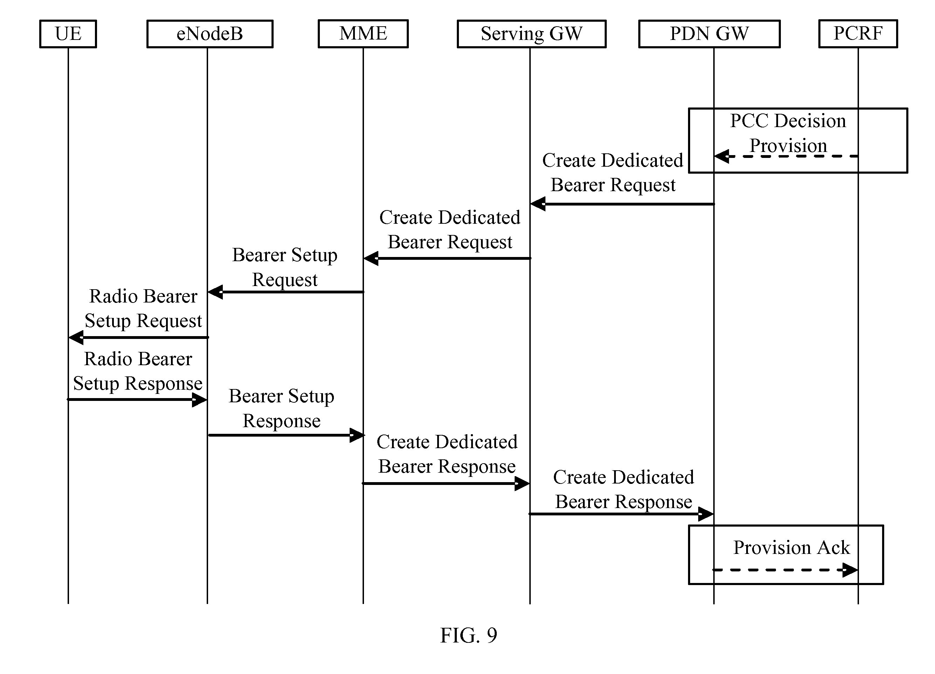

FIG. 9 is a flowchart of an MME obtaining a triggering condition. The MME may judge whether the triggering condition is fulfilled according to the process shown in FIG. 9.

Specifically, if the UE accesses the MSC through a PS network to perform a call service, at the time of setting up a PS-domain access bearer, the PCRF needs to tell the MME that the initiator of the bearer setup comes from the CS-domain CN. The PCRF may further tell which CS-domain CN device (for example, an MSC or a packet access unit) initiates setup of the bearer.

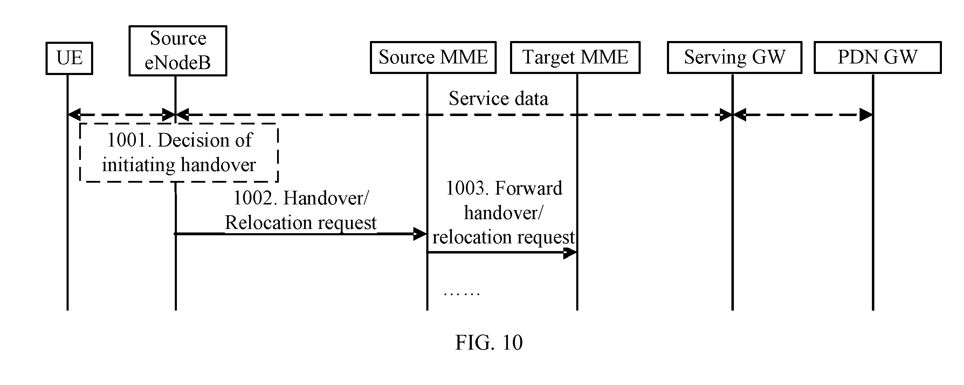

If the UE is handed over between different PS domains and the MME is changed before the handover from a PS domain to a CS domain, to enable the new MME to perform "conditional triggering", the old MME needs to transfer information about the packet bearer initiator to the new MME. FIG. 10 is a flowchart of transferring information about the packet bearer initiator. The information transfer process may include the following steps:
Step 1001: The source eNodeB (source enhanced NodeB) initiates handover.
Step 1002: The source eNodeB sends a handover/relocation request to the source MME.
Step 1003: The source MME sends a forward handover/relocation request to the target MME. That is, when handover between PS domains occurs, the source MME (MME or SGSN) sends a forward handover/relocation request that carries such information to the target MME (an MME or an SGSN).

In practice, when the target area is capable of both PS-domain access and CS-domain access, the MME may use the handover request sent by the eNodeB (requesting to handover between different PS domains), map the request to a request for handover from a PS domain to a CS domain, and initiate handover to the CS domain. The operation of initiating the handover to the CS domain may depend on the mode and the result in the triggering condition. Besides, no matter whether the target area is capable of PS-domain access, the eNodeB may initiate handover from the PS domain to the CS domain.

In practice, if the packet bearer set up by the SAE network for the user is applicable to the call service performed under control of the MSC and applicable to other services (such as Internet access or IMS-based services), when the target area is capable of both PS-domain access and CS-domain access, the MME may choose to hand over the UE from all bearers to the target PS domain, or hand over the UE from only the PS-domain bearer corresponding to the call under control of the MSC to the CS domain and hand over the UE from the remaining bearers to the target PS domain. Besides, for the bearer corresponding to the call under control of the MSC, when the handover to the PS domain fails, the handover to the CS domain may be attempted, and vice versa.

In practice, in step 802, to enable the MSC to identify the call corresponding to the handover/relocation request, the MME may provide the packet access unit with the user's IMSI or the communication IP address and port number. The packet access unit may find the call corresponding to the handover request according to the IMSI, or according to the communication IP address and port number of the bearer. Through the analog Iu interface between the packet access unit and the MSC server, the MSC server finds the call corresponding to the handover according to the mapping relationship between the call and the Iu interface connection set up at the time of setting up the call. Alternatively, the packet access unit may send the handover request that carries the IMSI information to the MSC server, and the MSC server finds the call corresponding to the handover request according to the IMSI.

In practice, if the PS-domain area and the target CS-domain area are managed by different MSCs, a bearer between the two MSCs needs to be set up in the foregoing handover process. The bearer setup process is the same as that in the existing CS-domain handover process.

In practice, if the UE has been handed over within a PS domain, different from the processing in the fourth embodiment described below, the main process of the UE handover between different PS domains is the same as that in the prior art. After the UE is handed over from one PS-domain area to another in that way, to support the handover from the PS domain to the CS domain in this embodiment, the forward handover request sent from the source MME to the target MME in the foregoing handover within the PS domain needs to carry information (such as the foregoing packet access unit identifier) which is provided by the packet access unit to the source MME at the time of setting up the PS-domain access bearer. In this way, the target MME can initiate handover to the CS domain to the packet access unit.

Obviously, if the eNodeB is replaced with the RNC or BSC, the MME with the SGSN, and the GW with the GGSN, this embodiment may be mapped to the scenario of UE handover from a GPRS PS-domain network to a CS domain.

Obviously, this embodiment is also applicable to the scenario where the MSC is in an integrated architecture or a split architecture (that is, the MSC is split into an MSC server and an MGW).

### Second Embodiment

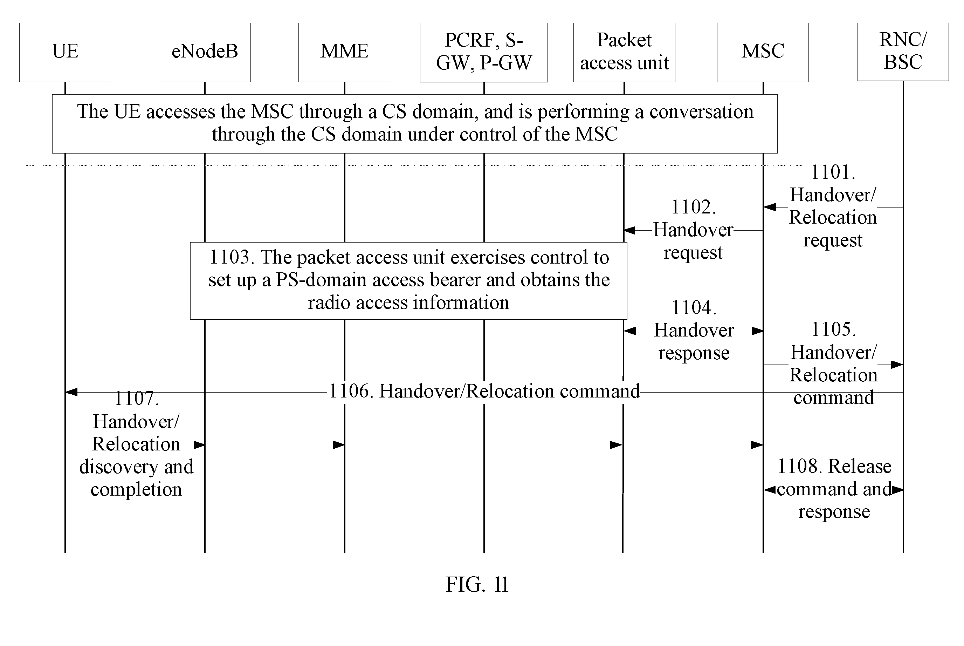

FIG. 11 is a flowchart of UE handover from a CS domain to a PS domain in the second embodiment of the present invention. This embodiment supposes that the CN is a WCDMA R4 network. As shown in FIG. 11, when the user performs a conversation through CS-domain access under control of the MSC, the UE is handed over. The target area is located in an SAE PS-domain AN. The handover process may include the following steps:
Step 1101: The RNC or the BSC sends a handover/relocation request to the MSC. The request carries the target area information.
Step 1102: The MSC sends a handover/relocation request to the packet access unit according to the packet access unit corresponding to the target area information.
Step 1103: The packet access unit initiates setup of a new PS-domain access bearer to the SAE network.
Step 1104: The packet access unit returns a handover/relocation response message to the MSC. The response message carries the description information of the new PS-domain access bearer.
Steps 1105-1106: The MSC instructs the UE to perform handover, and provides description information of the PS-domain access bearer (the information may be the same as the description information of the bearer for UE handover within the PS domain, and is primarily the parameter information of the new radio bearer, including the channel frequency) to the UE.
Step 1107: The UE performs handover, and the eNodeB detects the handover and notifies the MSC. The notification message passes through the MME and the packet access unit.
Step 1108: The MSC releases the CS-domain bearer.

In practice, in step 1103, the bearer may be set up in this way: The packet access unit sends a bearer setup request to the PCRF. The PCRF sends a bearer setup request to the PDN GW. After receiving the request, the PDN GW allocates an IP address to the UE, and sets up a new bearer between the PDN GW and the eNodeB (the method for setting up this bearer is similar to the method for setting up a dedicated bearer on the SAE network). The process of setting up the radio bearer in the eNodeB may be different from the setup of the dedicated bearer in the prior art. In this embodiment, the eNodeB sends no radio bearer setup request to the UE. Instead, after the radio bearer resources are allocated, the eNodeB returns a bearer setup response message directly (this message passes through the MME, the serving GW, and the PDN GW, and arrives at the PCRF). The PCRF provides the description information of the allocated radio bearer to the packet access unit, and the description information is further provided to the MSC.

In step 1103, the bearer is set up for transmitting media, and an additional bearer needs to be set up for transmitting signaling. The method for setting up the extra bearer may be the same as the method for setting up the new bearer.

In practice, if the PS-domain area and the target CS-domain area are managed by different MSCs, the source MSC sets up a relay bearer between the two MSCs in the foregoing handover process.

In practice, if the UE is handed over within the PS domain after handover from a CS domain to a PS domain, the processing at the target PS-domain AN is the same as the foregoing process, and the message interaction at the source PS-domain AN of the new handover is similar to that in the first embodiment.

### Third Embodiment

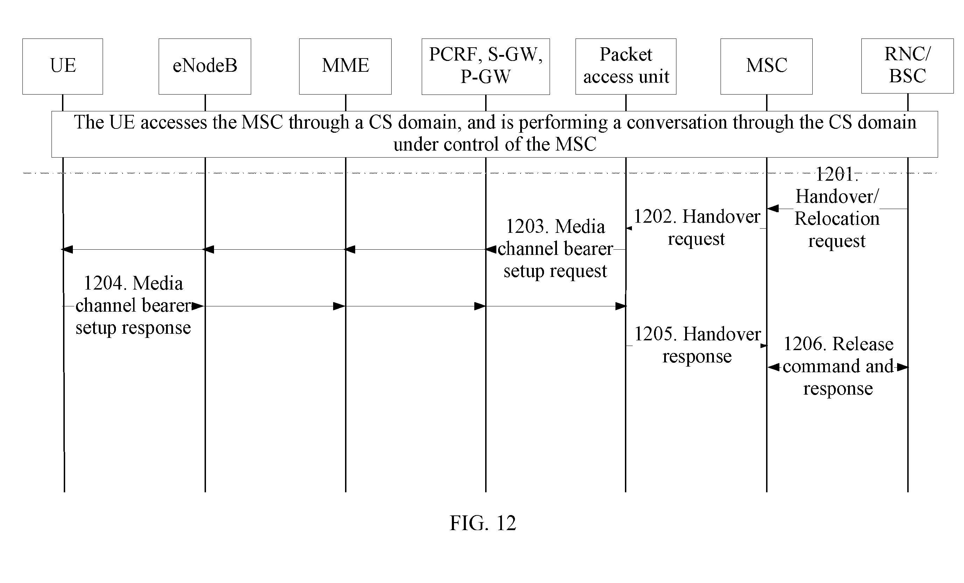

FIG. 12 is a flowchart of UE handover from a CS domain to a PS domain in the third embodiment of the present invention. This embodiment supposes that the CN is a WCDMA R4 network. As shown in FIG. 12, when the user performs a conversation through CS-domain access under control of the MSC, the UE is handed over. The target area is located in an SAE PS-domain AN. The handover process may include the following steps:
Step 1201: The RNC or the BSC sends a handover/relocation request to the MSC. The request carries the target area information.
Step 1202: The MSC sends a handover/relocation request to the packet access unit according to the packet access unit corresponding to the target area information.
Step 1203: The packet access unit initiates setup of a new PS-domain access bearer to the PDN GW on the SAE network. This bearer is used for transmitting media. Specifically, the packet access unit sends a service request to the PCRF on the SAE network, requesting to set up a dedicated bearer. The request for setting up the dedicated bearer (as shown in FIG. 11) may carry the information about the old bearer in the CS domain, or carry a handover instruction. Therefore, the UE substitutes the new PS-domain access bearer for the CS-domain access bearer.
Step 1204: The UE returns a response message about setup of a media channel bearer. Accordingly, the eNodeB, the MME, the serving GW, the PDN GW, and the PCRF return a response message about setup of a media channel bearer.
Step 1205: The packet access unit returns a handover/relocation response to the MSC.
Step 1206: The MSC releases the CS-domain bearer.

### Fourth Embodiment

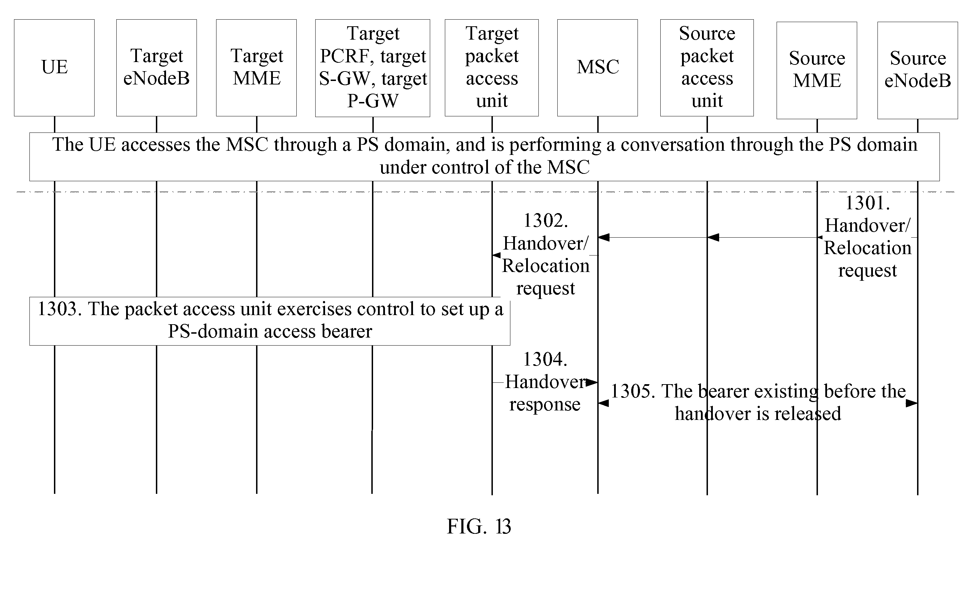

FIG. 13 is a flowchart of UE handover between different PS domains in the fourth embodiment of the present invention. This embodiment supposes that the CN is a WCDMA R4 network. As shown in FIG. 13, when the user performs a conversation through PS-domain access under control of the MSC, the UE is handed over. The target area is located on an SAE PS-domain AN. The handover process may include the following steps:
Step 1301: The source eNodeB sends a handover/relocation request to the source MME; the source MME sends a handover/relocation request to the source packet access unit; and the source packet access unit sends a handover/relocation request to the MSC server.
Step 1302: The MSC server discovers that the destination area is in the CS domain served by the MSC server, and therefore, sends the handover/relocation request to the packet access unit corresponding to the target area.
Step 1303: The target packet access unit initiates setup of a new PS-domain access bearer to the SAE network.
Step 1304: The target packet access unit returns a handover/relocation response to the MSC. The MSC instructs the UE to perform handover, and provides description information of the packet access bearer to the UE at the same time (the information may be the same as the description information of the bearer for handover within the PS domain, and is primarily information about parameters of the new radio bearer, including the channel frequency). The UE performs handover, and the target eNodeB detects the handover and notifies the MSC. The notification message passes through the target MME and the target packet access unit.
Step 1305: The old bearer is released (namely, the bearer existing between the UE and the MSC before the handover).

Obviously, if the eNodeB is replaced with the RNC or BSC, the MME with the SGSN, and the GW with the GGSN, this embodiment may be mapped to the scenario of UE handover from a GPRS PS-domain network to a CS domain.

As seen from the foregoing embodiments, a packet access unit may set up a signaling channel between the PS-domain AN and the CS-domain MSC, and maintain the service bearer channel between the UE and the MSC; after the packet access unit is connected to the PS-domain AN and the MSC, and after receiving a handover request, the embodiments of the present invention determine the target packet access unit and MSC, and then use the determined packet access unit and MSC to set up a new signaling channel and a new service bearer channel. Therefore, the service handover is enabled under control of the MSC; when the user performs a call, the service handover is enabled between a PS-domain area and a CS-domain area, and therefore, the operators can fully use the PS-domain network coverage to provide more continuous services for the user, and improve the network utilization efficiency.

Moreover, the embodiments of the present invention are completely independent of the IMS, thus facilitating the operators to explore the potentialities of the MSC and save costs.

It is apparent that those skilled in the art can make modifications and variations to the present invention without departing from the spirit and scope of the present invention. The present invention is intended to cover the modifications and variations provided that they fall in the scope of protection defined by the following claims or their equivalents.

## Claims

1. A system for user service handover, comprising a handover source, a Mobile Switching Center (MSC), a handover destination, and a User Equipment (UE),
**characterised in that**:
the handover source, or the handover destination, or both the handover source and the handover destination comprise a Packet Switched (PS)-domain Access Network (AN); the handover source is adapted to initiate handover to the handover destination;
the MSC is adapted to receive a handover request from the handover source, initiate handover to the handover destination, prepare a bearer to the handover destination, and instruct the UE to perform handover to the bearer at the destination; and
the handover destination is adapted to receive the handover request of the MSC, and set up a bearer between the UE and the MSC for transmitting signaling and media after the handover of the UE.

2. The handover system of claim 1, **characterised in that** :
if the handover source comprises a PS-domain AN, the handover source further comprises a packet access unit; if the handover destination comprises a PS-domain AN, the handover destination further comprises a packet access unit; and the packet access unit is adapted to: connect the MSC to the PS-domain AN, and manage a signaling channel and a media channel between the UE and the MSC.

3. The handover system of claim 2, **characterised in that**: the signaling channel between the packet access unit and the MSC is connected up through one of an analog Iu interface, an analog A-interface, and an internal interface, or through any combination thereof; and the signaling channel between the packet access unit and the UE is formed in one of the following modes:
if the UE has been attached to the PS-domain AN before the handover, an existing signaling channel between the UE and a Mobility Management Entity (MME) is combined with the signaling channel between the MME and the packet access unit to constitute the signaling channel between the UE and the packet access unit;
if the UE has been attached to the PS-domain AN before the handover, an existing Internet Protocol (IP) bearer between the UE and a Packet Data Network (PDN) Gateway (GW) or an IP bearer newly set up at time of the handover is combined with a Gi interface or an SGi interface to constitute the signaling channel between the UE and the packet access unit; and
if the UE is not attached to the PS-domain AN before the handover, the packet access unit initiates setup of a new IP bearer to the UE when the UE is handed over to a PS-domain area.

4. The handover system of claim 2, **characterised in that**: the packet access unit is adapted to manage, comprising to create, modify, and delete, a media channel between the UE and the MSC; and the packet access unit may set up a media channel between the UE and the MSC in one of the following modes:
if the UE has been attached to the PS-domain AN before the handover, an existing Internet Protocol (IP) bearer between the UE and the PDN GW or an IP bearer newly set up at time of the handover is combined with a Gi interface or an SGi interface to constitute the media channel between the UE and the MSC; and
if the UE is not attached to the PS-domain AN before the handover, the packet access unit initiates setup ofa new IP bearer to the UE when the UE is handed over to a PS-domain area.

5. The handover system of claim 2, **characterised in that** the handover source comprises the packet access unit and further comprises:
a packet access unit determining module, connected to a Mobility Management Entity (MME) on the PS-domain AN, and adapted to determine a target packet access unit that initiates the handover if one or more packet access units exist.

6. The handover system of claim 5, **characterised in that**:
the packet access unit determining module is further adapted to determine the packet access unit that initiates setup of a PS-domain access bearer to be the target packet access unit that sends the handover request.

7. The handover system of claim 6, **characterised in that**:
the packet access unit determining module is further adapted to record an identifier of the packet access unit when the packet access unit initiates setup of the PS-domain access bearer.

8. The handover system of claim 7, **characterised in that**:
after the UE sets up a call under control of the MSC through a PS domain, when the UE is handed over from one PS-domain area to another PS-domain area, if the MME changes, the old MME may further transfer the recorded identifier of the packet access unit to a new MME so that the new MME can initiate handover to the packet access unit.

9. The handover system of claim 1, **characterised in that**:
the handover source comprises a handover initiating module, which is adapted to initiate handover; for the PS-domain AN, the handover initiating module is a radio management entity on the PS-domain AN; for a Circuit Switched (CS)-domain AN, the handover initiating module is the radio management entity in a CS domain.

10. The handover system of claim 9, **characterised in that**:
the handover initiating module is further adapted to initiate handover to a target area according to quality of radio signals in a target CS-domain area or target PS-domain area that covers the UE.

11. The handover system of claim 1, **characterised in that** the handover source comprises:
a handover policy deciding module, adapted for a Mobility Management Entity (MME) on the PS-domain AN to decide whether to initiate handover to a packet access unit.

12. The handover system of claim 11, **characterised in that**:
the handover policy deciding module is further adapted to: decide whether to initiate handover according to existence of any bearer whose setup is initiated by the packet access unit among bearers set up for the UE; and if such a bearer exists, initiate handover to the packet access unit.

13. The system of any of claims 1-12, **characterised in that**:
the packet access unit is deployed independently, or combined with the PS-domain AN, or combined with the MSC.

14. The system of any of claims 1-12, **characterised in that**:
the MSC is in a split architecture, namely, composed of an MSC server and a Media Gateway (MGW); or is in an integrated architecture.

15. A method for user service handover, comprising a handover source, a Mobile Switching Center (MSC), a handover destination, and a User Equipment (UE), **characterised in that**: the handover source, or the handover destination, or both the handover source and the handover destination comprise a Packet Switched (PS)-domain Access Network (AN); and the method comprises:
initiating, by the handover source, handover to the handover destination to the MSC;
by the MSC, receiving a handover request from the handover source, initiating handover to the handover destination, preparing a bearer to the handover destination, and
instructing the UE to perform handover to the bearer at the destination; and handing over the UE to the bearer at the destination.

16. The method of claim 15, **characterised in that** if the handover source comprises a PS-domain AN, the handover source initiates the handover to the handover destination to the MSC in the following way:
sending, by a radio management entity at the source, the handover request to a Mobility Management Entity (MME);
sending, by the MME, the handover request to a packet access unit; and
sending, by the packet access unit, the handover request to the MSC.

17. The method of claim 16, **characterised in that** if multiple packet access units are connected to the MME, before the MME sends the handover request to the packet access unit, the MME further determines a target packet access unit in the following way:
when the packet access unit initiates setup of a PS-domain access bearer, an identifier of the packet access unit is recorded, and the identifier of the packet access unit is used to indicate the target packet access unit at time of handover; or
a mapping relationship between user location information and the packet access unit is configured at the packet access unit, and the MME determines the packet access unit according to current location information of the UE.

18. The method of claim 15, **characterised in that** if the handover destination comprises a PS-domain AN, the MSC prepares the bearer to the handover destination in the following way:
the MSC sends the handover request to a packet access unit;
the packet access unit instructs a policy decision entity to initiate setup of an Internet Protocol (IP) bearer; and
the policy decision entity exercises control to set up the IP bearer.

19. The method of claim 18, **characterised in that** if the UE is not attached to the PS-domain AN when the handover occurs, the policy decision entity exercises control to set up the IP bearer in the following way:
the policy decision entity sends a bearer setup instruction to a Packet Data Network (PDN) Gateway (GW);
the PDN GW allocates an IP address to the UE; and
the PDN GW sets up an IP bearer between the PDN GW and a radio management entity;
the radio management entity allocates radio bearer resources to the UE, and provides description information of the resources to the packet access unit which further provides the description information to the MSC; the MSC provides the information to the UE through a signaling channel at the handover source, and the UE sets up a bearer between the UE and the radio management entity.

20. The method of claim 19,**characterised in that**:
the method for setting up the IP bearer is also applicable to setup of a signaling channel at the handover destination.

21. The method of claim 18,**characterised in that**:
if the UE has been attached to the PS-domain AN when the handover occurs, the packet access unit obtains an IP address of the UE first, and then initiates setup of the IP bearer to the UE to the policy decision entity; and
the packet access unit obtains the IP address of the UE in this way: the packet access unit queries a Mobility Management Entity (MME) in the PS-domain AN for the IP address of the UE, or the MME sends the IP address of the UE to the packet access unit before the handover occurs.

22. The method of any of claim 15, claim 19, or claim 21, **characterised in that** the MSC instructs the UE to perform handover to the bearer at the destination in the following way:
through the signaling channel at the handover source, the MSC instructs the UE to perform handover to the bearer at the destination; or
through the signaling channel at the handover destination, the MSC instructs the UE to perform handover to the bearer at the destination; or
when the packet access unit initiates setup of a new destination-side bearer, the packet access unit notifies the UE to perform handover to the new destination-side bearer through a bearer setup signaling message.

23. An apparatus for user service handover, **characterised in that**, comprising:
a packet access unit, adapted to set up an Internet Protocol (IP) bearer to a User Equipment (UE) when the UE is handed over from another area to a Packet Switched (PS)-domain area;
an address allocating unit, adapted to allocate an IP address to the UE upon receiving a bearer setup instruction from a policy decision entity if the UE is not attached to a PS-domain Access Network (AN) when the handover occurs; and
a sending unit, adapted to provide information about the IP address to the packet access unit, whereupon the packet access unit transmits signaling messages to the UE according to the information about the IP address.

24. An apparatus for user service handover, **characterised in that**, comprising:
an information transferring unit, adapted to transfer an instruction of User Equipment (UE) handover controlled by a Mobile Switching Center (MSC) when the apparatus is located at a handover destination; and
a packet access unit, adapted toset up a signaling channel with the UE, and transmit the instruction through the signaling channel.

25. An apparatus for user service handover, **characterised in that**, comprising:
an information transferring unit, adapted to transfer an instruction of User Equipment (UE) handover controlled by a Mobile Switching Center (MSC) when the apparatus is located at a handover destination; and
a packet access unit, adapted to control setup of a Packet Switched (PS)-domain access bearer channel through a signaling message, wherein the signaling message for setting up the PS-domain access bearer channel carries the instruction which instructs the UE to perform handover to a new bearer.
